# FASCICULE DE BREVET EUROPEEN

(11) **EP 0 591 031 B1**
(45) Date de publication et mention de la délivrance du brevet: **12.06.1996**
(21) Numéro de dépôt: 93402330.0
(22) Date de dépôt: 23.09.1993
(51) Int. Cl.: B60R 19/24, B62D 27/02

(54) **Système de fixation sur la caisse d'un véhicule automobile d'un élément extérieur de carrosserie**
System um ein Aussenkarosserielement an einen Automobilkasten anzubringen
System for fastening an outside body element to an automotive vehicle body

(30) Priorité: 02.10.1992 FR 9212068
(43) Date de publication de la demande: 06.04.1994
(73) Titulaire: AUTOMOBILES PEUGEOT, F-75116 Paris (FR); AUTOMOBILES CITROEN, F-92200 Neuilly sur Seine (FR)
(72) Inventeur: Bodilis, Jean-Claude, F-94600 Choisy-le-Roi (FR)
(74) Mandataire: Gendraud, Pierre

(56) Documents cités:
- EP-A- 0 459 849
- WO-A-91/04900
- DE-A- 2 207 378
- DE-A- 4 037 408

## Description

L'invention concerne un système de fixation d'un élément extérieur de carrosserie, tel qu'un pare-chocs ou un élément de pare-chocs, sur la caisse d'une véhicule automobile du type défini dans le préambule de le revendication 1.

Un tel système est déjà connu, par exemple, du document EP-A-0 459 849.

Lors de la fixation sur la caisse d'un véhicule automobile d'un élément extérieur de carrosserie, pour qu'il se raccorde de façon esthétique avec les autres éléments, il est nécessaire, pour tenir compte de la dispersion des cotes, de pouvoir l'ajuster et de le caler avant sa fixation par vis ou boulons. Il est connu d'interposer entre la caisse et l'élément une résine, une colle ou un mastic polymérisant à l'air; ce produit permet une mise en place correcte de l'élément, assure son calage et sa fixation provisoire. On met alors en place les boulons de fixation.

La pose de la résine ou du mastic nécessite sur les chaînes d'assemblage des moyens de dépôt et de nettoyage fréquents qui dégagent des vapeurs nocives et nécessitent l'utilisation d'un dispositif d'aspiration pour évacuer ces vapeurs.

La présente invention a pour objet une fixation d'un élément extérieur de carrosserie, tel qu'un pare-chocs, sur la caisse d'un véhicule automobile, qui remédie à ces inconvénients.

Cette fixation est caractérisée en ce que l'élément, ou la caisse, porte des pièces de guidage pouvant s'engager et se centrer dans des guides de support de forme conjuguée fixés de façon amovible sur la caisse, ou l'élément respectivement, et en ce que chaque guide de support a la forme générale d'un pot qui est rempli par un produit à durcissement lent par exemple un produit polymérisant à l'air et est fermé sous vide par une pellicule d'isolement. Lorsqu'on met en place l'élément sur la caisse, les pièces de guidage s'engagent dans les guides de support en perforant les pellicules qui les obturaient. Le produit des pots est expulsé et se répand entre la caisse et l'élément en assurant son calage, puis sa fixation provisoire; il n'est plus nécessaire d'avoir sur chaîne une installation de dépôt du produit donc plus d'installation de nettoyage, ni de dispositif d'aspiration. Des boulons de fixation sont ensuite serrés, après ajustement des différents éléments.

On a décrit ci-après, à titre d'exemple non limitatif, un mode de réalisation d'une fixation selon l'invention, avec référence aux dessins annexés dans lesquels :
La Figure 1 est une vue en coupe verticale d'un pare-chocs de véhicule automobile monté sur un front de calandre;
La Figure 2 est une vue en coupe d'un guide de support suivant II-II de la Figure 3;
La Figure 3 est une vue de dessus d'un guide de support;
La Figure 4 est une vue en coupe horizontale d'une partie de la caisse du véhicule et du pare-chocs par un plan passant par les axes des pièces de guidage;
La Figure 5 est une vue à plus grande échelle d'un détail de la Figure 4.

Au dessin, on voit un pare-chocs 1 destiné à être fixé sur la caisse 2 d'un véhicule automobile. Le pare-chocs présente une armature 3 qui porte des éléments de guidage 4 destinés à s'engager dans des guides de support 5 portés par la caisse 2 et fixés à cette caisse, par exemple par clippage.

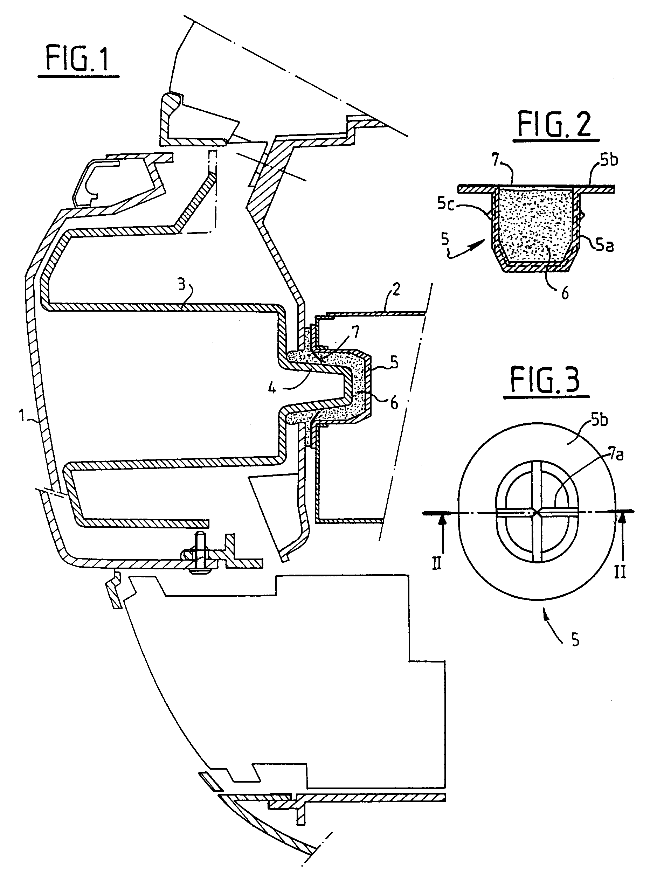

Comme on peut le voir aux Figures 2 et 3, chacun des guides de support 5 présente la forme générale d'un pot cylindrique dont le fût 5a est surmonté d'une collerette 5b et est muni de moyens de clippage 5c qui, coopérant avec une collerette 2a de la caisse, maintiennent les guides de support 5 sur la caisse 2.

Avant leur montage sur la caisse 2 les pots 5 sont remplis d'un produit à durcissement lent 6 polymérisant à l'air et leurs ouvertures sont fermées sous vide par une pellicule 7 qui isole le produit 6 de l'air et l'empêche ainsi de polymériser. Cette pellicule présente des nervures de renfort 7a au droit de l'ouverture des guides de support 5.

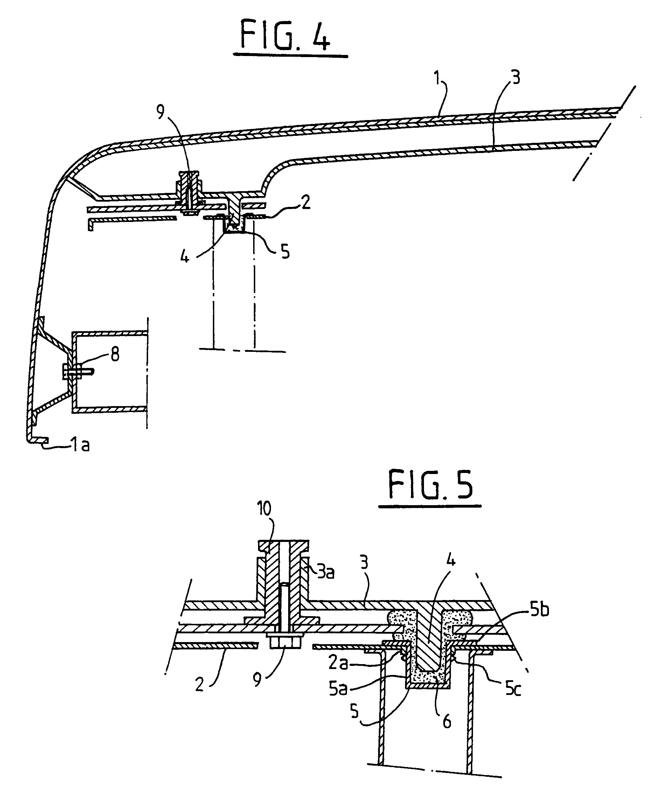

Pour fixer le pare-chocs à la caisse 2, on met en place le pare-chocs dont les éléments de guidage 4 perforent les pellicules 7 des guides de support et chassent le produit à durcissement lent 6 qu'ils contiennent. Cette matière se répand entre la caisse et le pare-chocs en les calant l'un par rapport à l'autre et en assurant leur fixation provisoire. Après avoir mis le pare-chocs en position correcte, on parfait sa fixation par un dispositif additionnel comportant deux vis 9, se vissant dans deux douilles 10 qui coulissent dans deux manchons 3a de l'armature de pare-chocs 3, et deux boulons de blocage 8 portés par les extrémités latérales du pare-chocs (voir Figures 4 et 5).

On commence par bloquer les vis 9, immobilisant le pare-chocs en hauteur et transversalement par rapport à la caisse du véhicule. Puis le pare-chocs ne pouvant plus se déplacer que suivant l'axe longitudinal du véhicule, on le positionne de façon que les extrémités latérales du pare-chocs s'alignent avec les découpes de passage de roue des ailes avant du véhicule, puis on bloque les boulons 8.

## Revendications

1. Système de fixation d'un élément extérieur de carrosserie (1), tel qu'un pare-chocs ou un élément de pare-chocs, sur la caisse (2) d'un véhicule automobile du type comportant des éléments de guidage (4) portés par la caisse (2) du véhicule ou par l'élément extérieur de carrosserie (1) et pouvant s'engager et se centrer dans des guides supports (5) portés par l'élément extérieur (1) ou la caisse (2),
caractérisé en ce que les guides supports (5) sont en forme de pots fixés sur la caisse du véhicule, sont remplis d'un produit à durcissement lent (6) et sont fermés hermétiquement par un élément isolant (7) destructible par les éléments de guidage (4).

2. Système de fixation d'un élément extérieur de carrosserie suivant la revendication 1,
caractérisé en ce que les guides supports (5) sont fixés de façon amovible.

3. Système de fixation d'un élément extérieur de carrosserie suivant les revendications 1 et 2,
caractérisé en ce que les guides supports (5) sont fixés par des clips.

4. Système de fixation d'un élément extérieur de carrosserie suivant les revendications 1, 2 et 3,
caractérisé en ce que les guides supports (5) comportent un fût cylindrique (5a) surmonté d'une collerette (5b) et munis de moyens de clippage (5c).

5. Système de fixation d'un élément extérieur de carrosserie suivant la revendication 1,
caractérisé en ce que le produit à durcissement lent (6) est un produit polymérisant à l'air.

6. Système de fixation d'un élément extérieur de carrosserie suivant la revendication 1,
caractérisé en ce que l'élément isolant étanche (7) est une pellicule présentant des nervures de renfort (7a) au droit de l'ouverture du guide support (5) en forme de pot.

## Claims

1. A system for fastening an external bodywork element (1), such as a bumper or a bumper element, to the body (2) of a motor vehicle of the type comprising guide elements (4) on the body (2) of the vehicle or on the external bodywork element (1) that can be engaged and centred in support guides (5) on the external element (1) or the body (2),
characterised in that the support guides (5) are shaped like pots fixed to the vehicle body, are filled with a product (6) that hardens slowly, and are hermetically sealed by an insulating element (7) that can be destroyed by the guide elements (4).

2. A system for fastening an external bodywork element according to Claim 1,
characterised in that the support guides (5) are fastened so as to be removable.

3. A system for fastening an external bodywork element according to Claims 1 and 2,
characterised in that the support guides (5) are fastened by clips.

4. A system for fastening an external bodywork element according to Claims 1, 2 and 3,
characterised in that the support guides (5) comprise a cylindrical shaft (5a) surmounted by a flange (5b) and provided with clip means (5c).

5. A system for fastening an external bodywork element according to Claim 1,
characterised in that the slow-hardening product (6) is a product that polymerises in air.

6. A system for fastening an external bodywork element according to Claim 1,
characterised in that the sealed insulating element (7) is a film with strengthening ribs (7a) directly above the opening of the pot-shaped support guide (5).

## Patentansprüche

1. System zur Befestigung eines Karosserie-Außenelements (1), wie etwa eines Stoßfängers oder Stoßfängerelements, am Aufbau (2) eines Kraftfahrzeugs, das der Art nach Führungselemente (4) aufweist, die vom Fahrzeugaufbau (2) oder vom Karosserie-Außenelement (1) getragen sind und in Trägerführungen (5) eingreifen und sich auf diese zentrieren können, die vom Außenelement (1) oder vom Aufbau (2) getragen sind, dadurch gekennzeichnet, daß die Trägerführungen (5) die Form von Töpfen aufweisen, die auf dem Fahrzeugaufbau befestigt sind, mit einem Erzeugnis mit langsamer Aushärtung (6) gefüllt sind und hermetisch von einem Isolierelement (7) abgeschlossen sind, das durch die Führungselemente (4) zerstörbar ist.

2. System zur Befestigung eines Karosserie-Außenelements nach Anspruch 1, dadurch gekennzeichnet, daß die Trägerführungen (5) abnehmbar befestigt sind.

3. System zur Befestigung eines Karosserie-Außenelements nach den Ansprüchen 1 und 2, dadurch gekennzeichnet, daß die Trägerführungen (5) durch Klipps befestigt sind.

4. System zur Befestigung eines Karosserie-Außenelements nach den Ansprüchen 1, 2 und 3, dadurch gekennzeichnet, daß die Trägerführungen (5) einen zylindrischen Schaft (5a) aufweisen, auf dem ein Flansch (5b) angebracht ist, und mit Rastmitteln (5c) versehen sind.

5. System zur Befestigung eines Karosserie-Außenelements nach Anspruch 1, dadurch gekennzeichnet, daß das Erzeugnis mit langsamer Aushärtung (6) ein Erzeugnis ist, das an Luft polymerisiert.

6. System zur Befestigung eines Karosserie-Außenelements nach Anspruch 1, dadurch gekennzeichnet, daß das dichte Isolierelement (7) eine Folie ist, die Verstärkungsrippen (7a) aufweist, die mit der Öffnung der topfförmigen Trägerführung (5) fluchten.
